# EUROPEAN PATENT APPLICATION

(11) **EP 4 443 980 A1**
(43) Date of publication of application: **09.10.2024**
(21) Application number: 21965886.1
(22) Date of filing: 30.11.2021
(51) Int. Cl.: H04W 52/00

(54) **ENERGY SAVING SIGNAL TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Ipside
(86) International application number: PCT/CN2021/134384
(87) International publication number: WO 2023/097442

(57) **Abstract**

The present disclosure provides a transmission method and apparatus for a power saving signal, a device, and a storage medium and relates to the field of mobile communication. The method includes determining a transmission manner for a power saving signal. The transmission manner includes a first transmission manner or a second transmission manner, where the first transmission manner is different from the second transmission manner in a parameter of at least one of a waveform, a modulation mode, a coding mode, or a multiple access mode.

## Description

### TECHNICAL FIELD

Embodiments of the present disclosure relate to the field of mobile communication, and in particular to a transmission method and apparatus for a power saving signal, a device, and a storage medium.

### BACKGROUND

In the evolution of the 5th generation (5G) mobile communication system, higher requirements for power saving of a user equipment (UE) in a connected state are brought forward.

A power saving signal is introduced in the related art. The power saving signal is used in combination with a discontinuous reception (DRX) mechanism. A terminal receives an indication of the power saving signal prior to an On duration in a DRX cycle. When the terminal has data transmission in a DRX cycle, the power saving signal "wakes up" the terminal to monitor the physical downlink control channel (PDCCH) in the On duration in the DRX cycle. Otherwise, when the terminal does not have data transmission in the DRX cycle, the power saving signal does not "wake up" the terminal and the terminal does not need to monitor the PDCCH in the On duration in the DRX cycle.

### SUMMARY

Embodiments of the present disclosure provide a transmission method and apparatus for a power saving signal, a device, and a storage medium, so as to send the power saving signal using different transmission manners, thereby enabling better power saving of a user equipment (UE) in a connected state. The technical solution is as follows.

A transmission method for a power saving signal is provided and is applied to a terminal according to an aspect of embodiments of the present disclosure. The method includes the following. The terminal determines a transmission manner for the power saving signal, the transmission manner including a first transmission manner or a second transmission manner, where the first transmission manner is different from the second transmission manner in a parameter of at least one of a waveform, a modulation mode, a coding mode, or a multiple access mode.

A transmission method for a power saving signal is provided and is applied to a network device according to an aspect of embodiments of the present disclosure. The method includes the following. The network device determines a transmission manner for the power saving signal, the transmission manner including a first transmission manner or a second transmission manner, where the first transmission manner is different from the second transmission manner in a parameter of at least one of a waveform, a modulation mode, a coding mode, or a multiple access mode.

A transmission apparatus for a power saving signal is provided according to an aspect of embodiments of the present disclosure. The apparatus includes a first determining module. The first determining module is configured to determine a transmission manner for the power saving signal, the transmission manner including a first transmission manner or a second transmission manner, where the first transmission manner is different from the second transmission manner in a parameter of at least one of a waveform, a modulation mode, a coding mode, or a multiple access mode.

A transmission apparatus for a power saving signal is provided according to an aspect of embodiments of the present disclosure. The apparatus includes a second determining module. The second determining module is configured to determine a transmission manner for the power saving signal, the transmission manner including a first transmission manner or a second transmission manner, where the first transmission manner is different from the second transmission manner in a parameter of at least one of a waveform, a modulation mode, a coding mode, or a multiple access mode.

A terminal is provided according to an aspect of embodiments of the present disclosure. The terminal includes a processor. The processor is configured to determine a transmission manner for a power saving signal, the transmission manner including a first transmission manner or a second transmission manner, where the first transmission manner is different from the second transmission manner in a parameter of at least one of a waveform, a modulation mode, a coding mode, or a multiple access mode.

A network device is provided according to an aspect of embodiments of the present disclosure. The network device includes a processor. The processor is configured to determine a transmission manner for a power saving signal by a terminal, the transmission manner including a first transmission manner or a second transmission manner, where the first transmission manner is different from the second transmission manner in a parameter of at least one of a waveform, a modulation mode, a coding mode, or a multiple access mode.

A computer-readable storage medium is provided according to an aspect of embodiments of the present disclosure. The computer-readable storage medium is configured to store a computer program that is executable by a processor to perform the foregoing transmission method for a power saving signal.

A chip is provided according to an aspect of embodiments of the present disclosure. The chip includes programmable logic circuits and/or program instructions. The chip is configured to perform the foregoing transmission method for a power saving signal when running.

A computer program product or computer program is provided according to an aspect of embodiments of the present disclosure. The computer program product or computer program includes computer instructions which are stored in a computer-readable storage medium. A processor reads the computer instructions from the computer-readable storage medium and executes the computer instructions to perform the foregoing transmission method for a power saving signal.

Technical solutions provided in embodiments of the present disclosure have the following advantages.

The terminal and/or the network device perform transmission of the power saving signal in an appropriate transmission manner, e.g., in the case where power consumption in the first transmission manner is less than power consumption in the second transmission manner under the same condition, the terminal and/or the network device perform transmission of the power saving signal in the first transmission manner when capable, so as to achieve better power saving. The UE in the connected state thus can have better performance in power saving, thereby improving the endurance time of the UE.

### BRIEF DESCRIPTION OF THE DRAWINGS

In order to describe more clearly technical solutions of embodiments of the present disclosure, the following will give a brief introduction to the accompanying drawings used for describing embodiments. Apparently, the accompanying drawings described below are some embodiments of the disclosure. Based on these drawings, those of ordinary skill in the art can also obtain other drawings without creative effort.
FIG. 1 is a schematic diagram of a zero-power communication system provided in an example embodiment of the present disclosure.
FIG. 2 is a diagram illustrating a principle of radio frequency power harvesting provided in an example embodiment of the present disclosure.
FIG. 3 is a diagram illustrating a principle of backscatter communication provided in an example embodiment of the present disclosure.
FIG. 4 is a diagram illustrating a principle of resistive load modulation provided in an example embodiment of the present disclosure.
FIG. 5 is a schematic diagram of a coding mode provided in an example embodiment of the present disclosure.
FIG. 6 is a schematic diagram of a terminal having a wake-up receiver provided in an example embodiment of the present disclosure.
FIG. 7 is a schematic diagram of a zero-power communication system provided in an example embodiment of the present disclosure.
FIG. 8 is a flow chart of a transmission method for a power saving signal provided in an example embodiment of the present disclosure.
FIG. 9 is a time-frequency diagram for a power saving signal and a control channel provided in an example embodiment of the present disclosure.
FIG. 10 is a flow chart of a transmission method for a power saving signal provided in an example embodiment of the present disclosure.
FIG. 11 is a schematic flowchart time-frequency diagram of a power saving signal provided in an example embodiment of the present disclosure.
FIG. 12 is a flow chart of a transmission method for a power saving signal provided in an example embodiment of the present disclosure.
FIG. 13 is a flow chart of a transmission method for a power saving signal provided in an example embodiment of the present disclosure.
FIG. 14 is a flow chart of a transmission method for a power saving signal provided in an example embodiment of the present disclosure.

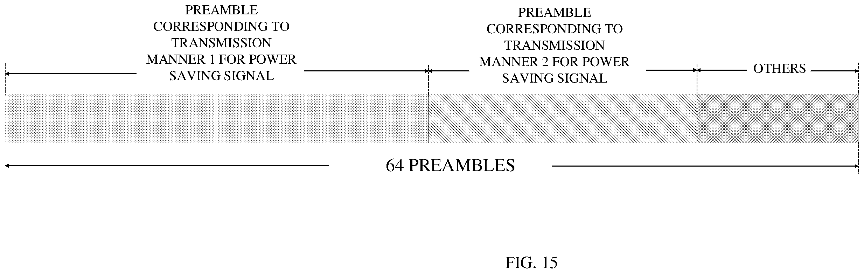

FIG. 15 is a schematic diagram illustrating an association relationship between preambles and a power saving signal provided in an embodiment of the present disclosure.
FIG. 16 is a flow chart of a transmission method for a power saving signal provided in an example embodiment of the present disclosure.
FIG. 17 is a schematic diagram of spatial information of a power saving signal provided in an example embodiment of the present disclosure.
FIG. 18 is a flow chart of a transmission method for a power saving signal provided in an example embodiment of the present disclosure.
FIG. 19 is a schematic diagram of a wireless power supply node provided in an example embodiment of the present disclosure.
FIG. 20 is a block diagram of a transmission apparatus for a power saving signal provided in an example embodiment of the present disclosure.
FIG. 21 is a block diagram of a transmission apparatus for a power saving signal provided in an example embodiment of the present disclosure.
FIG. 22 is a schematic structural diagram of a terminal provided in an example embodiment of the present disclosure.
FIG. 23 is a schematic structural diagram of a network device provided in an example embodiment of the present disclosure.

### DETAILED DESCRIPTION

In order to make the objectives, technical solutions, and advantages of the present disclosure clearer, embodiments of the present disclosure will be further described in detail below with reference to the accompanying drawings.

The network architecture and service scenario described in the embodiments of the disclosure are intended to describe the technical solutions of the embodiments of the disclosure more clearly, and do not constitute limitation on the technical solutions provided in the embodiments of the disclosure. Those of ordinary skill in the art can appreciate that, with evolution of network architectures and emergence of new service scenarios, the technical solutions provided in the embodiments of the disclosure are also applicable to similar technical problems.

Before presenting the technical solutions of the present disclosure, some technical knowledge involved in the present disclosure is introduced and described.

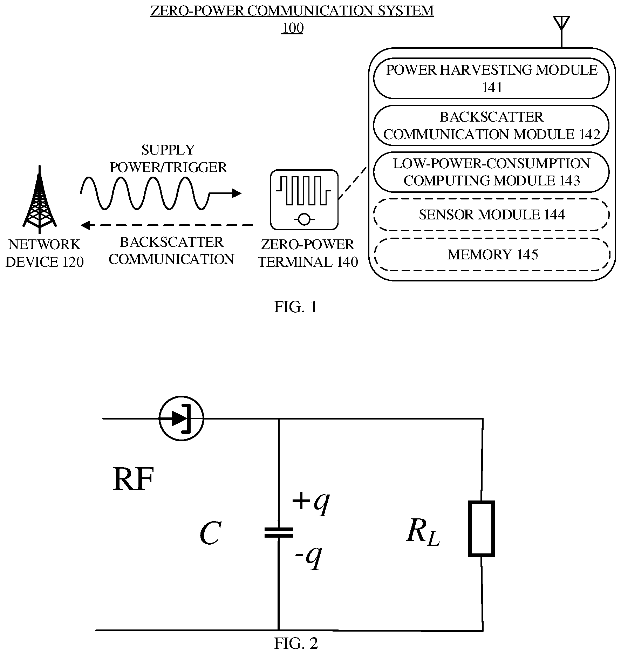

FIG. 1 is a schematic diagram of a zero-power communication system 100. The zero-power communication system 100 includes a network device 120 and a zero-power terminal 140.

The network device 120 is configured to send a wireless power supply signal and a downlink communication signal to the zero-power terminal and receive a backscatter signal from the zero-power terminal. The zero-power terminal 140 includes a power harvesting module 141, a backscatter communication module 142, and a low-power-consumption computing module 143. The power harvesting module 141 may harvest energy carried in spatial radio waves, so as to drive the low-power-consumption computing module 143 of the zero-power terminal 140 and achieve backscatter communication. After obtaining energy, the zero-power terminal 140 may receive a control signaling from the network device 120 and send data to the network device 120 through backscattering according to the control signaling. The sent data may be data stored in the zero-power terminal (e.g., identification or pre-written information such as the date of manufacture, brand, manufacturer, etc., of goods).

The zero-power terminal 140 may further include a sensor module 144 and a memory 145. The sensor module 144 may include various sensors. Based on a zero-power mechanism, the zero-power terminal 140 may report data captured by each sensor. The memory 145 is configured to store some basic information (such as an item identifier) or obtain sensor data such as ambient temperature and ambient humidity.

The zero-power terminal does not need a battery and can achieve simple computing such as simple signal demodulation, decoding, encoding, and modulation by using the low-power-consumption computing module. Therefore, the zero-power module requires only minimal hardware design, so that a zero-power device has a low cost and small volume.

Key technologies for zero-power communication are illustrated as follows.

### Radio Frequency (RF) Power Harvesting

FIG. 2 is a diagram illustrating a principle of RF power harvesting. The RF power harvesting is based on the electromagnetic induction principle, using an RF module to conduct electromagnetic induction and connect with a capacitor C and a load resistor R_{L} that are connected in parallel, so as to harvest energy of spatial electromagnetic waves to obtain energy for driving a zero-power terminal, for example, driving a low-power demodulation module and modulation module, driving a sensor, and accessing a memory, etc. Therefore, the zero-power terminal does not need a conventional battery.

### Backscatter Communication

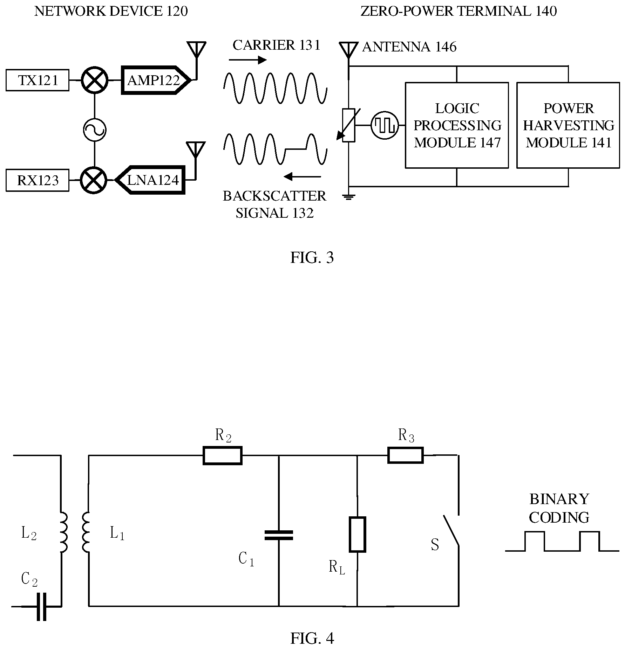

FIG. 3 is a diagram illustrating a principle of backscatter communication. The zero-power terminal 140 receives a wireless signal carrier 131 which is sent by a transmit module (TX) 121 of the network device 120 via an asynchronous mapping procedure (AMP) 122, and modulates the wireless signal carrier 131. The zero-power terminal 140 uses a logic processing module 147 to load the information required to be sent and uses the power harvesting module 141 to harvest RF energy. The zero-power terminal 140 uses an antenna 146 to radiate a modulated backscatter signal 132. This process of information transmission is referred to as backscatter communication. A receive module (RX) 123 of the network device 120 uses a low noise amplifier (LNA) 124 to receive the modulated backscatter signal 132. Backscattering is closely related to load modulation. In load modulation, a circuit parameter(s) of an oscillation circuit in the zero-power terminal is adjusted and controlled according to a tick of a data stream, so as to consequently change magnitude and other parameters of impedance of an electronic tag, thus completing modulation.

The load modulation is mainly implemented in two ways: resistive load modulation and capacitive load modulation. FIG. 4 is a diagram illustrating a principle of resistive load modulation. In resistive load modulation, the load resistor R_{L} is connected in parallel with a third resistor R₃ that is switched on and off under the control of binary coding. The on and off of the third resistor R₃ results in a change in the circuit voltage. The load resistor R_{L} and a first capacitor C₁ are connected in parallel. The load resistor R_{L} and a second resistor R₂ are connected in series. The second resistor R₂ and a first inductor L₁ are connected in series. The first inductor L₁ is coupled to a second inductor L₂. The second inductor L₂ and a second capacitor C₂ are connected in series. Amplitude-shift keying (ASK) can be achieved, i.e., the modulation and transmission of a signal can be achieved, by adjusting the magnitude of a backscatter signal from the zero-power terminal. Similarly, in capacitive load modulation, the on and off of a capacitor can result in a change in a resonant frequency of a circuit to achieve frequency-shift keying (FSK), i.e., the modulation and transmission of a signal is achieved by adjusting an operating frequency of the backscatter signal from the zero-power terminal.

The zero-power terminal performs information modulation on an incoming signal by means of load modulation, so as to achieve backscatter communication. The zero-power terminal has significant advantages as follows. The terminal does not actively perform signal transmission and therefore does not require a complex RF circuit such as a power amplifier (PA), an RF filter, etc. The terminal does not need to actively generate a high-frequency signal and therefore does not need a high-frequency crystal oscillator. By using backscatter communication, the terminal does not need to consume the terminal's own energy to perform signal transmission.

Coding modes for the zero-power communication are illustrated as follows.

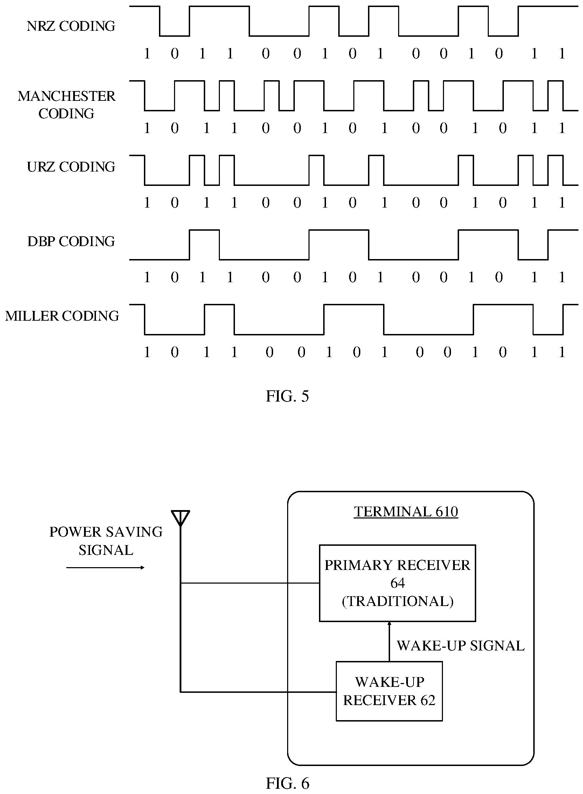

FIG. 5 is a schematic diagram of the coding modes. In data transmitted by the electronic tag, binaries 1 and 0 may be represented by different forms of codes. A radio frequency identification (RFID) system generally uses one of the following coding methods: non-return-to-zero (NRZ)-inverted coding, Manchester coding, unipolar return zero (URZ) coding, differential binary phase (DBP) coding, Miller coding, and differential coding. That is, different pulse signals can be used to represent 0 and 1.

NRZ coding: In the NRZ coding, a high level represents binary "1", and a low level represents binary "0". FIG. 5 illustrates a schematic level diagram of binary data 101100101001011 encoded by using the NRZ coding.

Manchester coding: The Manchester coding is also referred to as split-phase coding. In the Manchester coding, a binary value is represented by a transition (rising or falling) of a level at half a bit period in a bit length. A negative transition at half the bit period represents the binary "1", and a positive transition at half the bit period represents the binary "0". An error of data transmission refers to that when data bits sent simultaneously by multiple electronic tags have different values, a received rising edge and falling edge cancel each other out, resulting in an uninterrupted carrier signal in the whole bit length. The Manchester code is impossible to be unchanged in the bit length. According to the error, a reader/writer can determine the specific location where a collision occurs. The Manchester coding is beneficial for finding an error in data transmission. When load modulation or backscatter modulation of a carrier is used, the Manchester coding is usually used for data transmission from the electronic tag to the reader/writer. FIG. 5 illustrates a schematic level diagram of binary data 101100101001011 encoded by using the Manchester coding.

URZ coding: In the URZ coding, a high level in the first half of the bit period represents the binary "1", and a low level signal maintaining in the whole bit period represents the binary "1". FIG. 5 illustrates a schematic level diagram of binary data 101100101001011 encoded by using the URZ coding.

DPB coding: In the DPB coding, any edge at half the bit period represents the binary "0" and the case of no edge represents the binary "1". Further, at the beginning of each bit period, the level is inverted. For a receiver, bit beats are easy to reconstruct. FIG. 5 illustrates a schematic level diagram of binary data 101100101001011 encoded by using the DPB coding.

Miller coding: In the Miller coding, any edge at half the bit period represents the binary "1" and an unchanged level when entering the next bit period represents the binary "0". The level changes at the beginning of a bit period. For a receiver, bit beats are easy to reconstruct. FIG. 5 illustrates a schematic level diagram of binary data 101100101001011 encoded by using the Miller coding.

Differential coding: In the differential coding, every binary "1" to be transmitted causes transitions in a signal level, and the signal level remains unchanged for the binary "0".

The zero-power terminal is illustrated in detail as follows. The zero-power terminal can be classified into the following types based on energy sources and usage of the zero-power terminal.

### Passive Zero-power Terminal

The zero-power terminal does not need a built-in battery. When the zero-power terminal gets close to the network device, the zero-power terminal is within a near-field of antenna radiation of the network device. Exemplarily, the network device is a reader/writer of the RFID system. Therefore, an antenna of the zero-power terminal generates an induced current through electromagnetic induction. The induced current drives a low-power chip circuit in the zero-power terminal to perform demodulation of a forward-link signal and modulation of a reverse-link signal. For a backscatter link, the zero-power terminal performs signal transmission through backscattering. The passive zero-power terminal does not need a built-in battery to drive either the forward link or the reverse link. The passive zero-power terminal truly is a zero-power terminal. The passive zero-power terminal does not need a battery and has a simple RF circuit and a simple baseband circuit. For example, the passive zero-power terminal does not need components such as a low-noise amplifier (LNA), a PA, a crystal oscillator, an analogue-to-digital converter (ADC), or the like. The passive zero-power terminal thus has advantages including small size, lightweight, low price, and long service life.

### Semi-passive Zero-power Terminal

A semi-passive zero-power terminal is not equipped with a conventional battery but can use an RF power harvesting module to harvest radio wave energy and store the harvested energy in a power storage unit (e.g., a capacitor). After the power storage unit obtains energy, the power storage unit can drive a low-power chip circuit of the zero-power terminal to perform the demodulation of the forward-link signal and the modulation of the reverse-link signal. For the backscatter link, the zero-power terminal performs signal transmission through backscattering.

The semi-passive zero-power terminal does not need a built-in battery to drive either the forward link or the reverse link. The passive zero-power terminal uses energy stored in a capacitor for operation, and the energy is radio wave energy harvested by the RF power harvesting module. The semi-passive zero-power terminal truly is a zero-power terminal. The semi-passive zero-power terminal inherits many advantages of the passive zero-power terminal, and thus has advantages including small size, lightweight, low price, and long service life.

### Active Zero-power Terminal

An active zero-power terminal can have a built-in battery. The battery is used to drive the low-power chip circuit of the zero-power terminal to perform the demodulation of the forward-link signal and the modulation of the reverse-link signal. However, for the backscatter link, the zero-power terminal performs signal transmission through backscattering. The zero-power consumption of active zero-power terminal is mainly reflected in the fact that the signal transmission in the reverse link does not require the terminal's own energy but is based on backscattering. The active zero-power terminal is used in some scenarios with high requirements on communication distance, reading delay, and other aspects.

With the development of the communication industry, particularly the increase of applications in the 5G industry, there are more and more types and application scenarios of connections, and higher requirements on the price and power consumption of a communication terminal are brought forward. The application of a passive internet of things device that is battery free and low-cost becomes a key technology of cellular internet of things, which can expand the types and the number of network-connected terminals and achieve internet of everything. The passive internet of things device may be based on the zero-power communication technology, such as RFID technology, and is extended on this basis so as to be applicable to cellular internet of things.

Based on the above idea of the zero-power terminal, the present disclosure provides a schematic diagram of a terminal 610 having a wake-up receiver. As illustrated in FIG. 6, the terminal 610 includes a wake-up receiver 62 and a primary receiver 64.

The wake-up receiver 62 is a zero-power receiver or a low-power receiver with power consumption less than a predetermined condition. The wake-up receiver 62 receives a power saving signal in a first transmission manner.

The primary receiver 64 is a traditional receiver. The wake-up receiver 62 receives the power saving signal in a second transmission manner.

Under equal conditions, such as both being used for transmission of the power saving signal, the power consumption in the first transmission manner is less than the power consumption in the second transmission manner. Distinct from the primary receiver 64 of a user equipment (UE), the wake-up receiver 62 is a primary receiver 64 module specifically configured to receive the power saving signal. Compared to the primary receiver 64 of the UE, the wake-up receiver 62 is the low-power receiver or even the zero-power receiver. The wake-up receiver 62 adopts similar technologies of RFID including passive, envelope detection, power harvesting, and the like. An RF signal may activate the wake-up receiver 62 and provide energy for the wake-up receiver 62, so as to drive the wake-up receiver 62 to receive the power saving signal and further send indication information to the primary receiver 64 of the UE, where the indication information is used to wake up the primary receiver 64 of the UE to further receives a control channel. The wake-up receiver 62 may be combined with the UE as an additional module to the primary receiver of the UE, or the wake-up receiver 62 may stand alone as a wake-up function module of the UE.

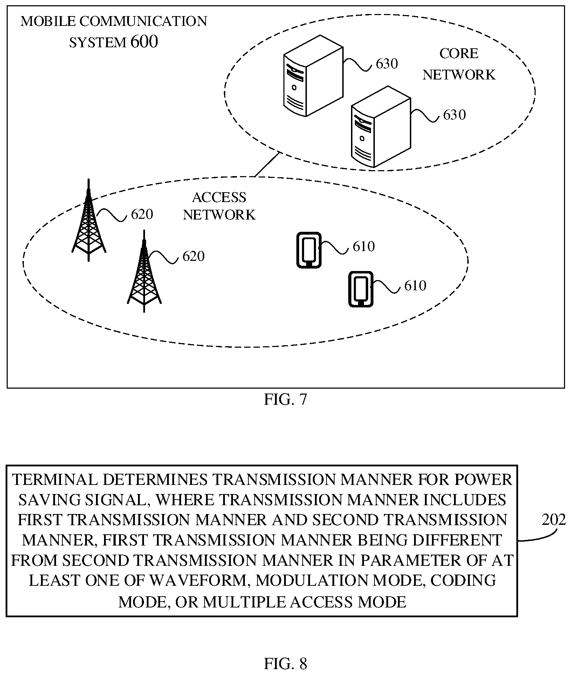

FIG. 7 is a schematic diagram of a mobile communication system 600 provided in an example embodiment of the present disclosure. The mobile communication system 600 at least includes the terminal 610, a network device 620, and a core network (CN) device 630.

The terminal 610 includes the wake-up receiver 62 and the primary receiver 64 as illustrated in FIG. 6.

The network device 620 provides a communication link for the terminal 610 and/or provides radio waves for the terminal 610 to harvest radio wave energy based on the RF power harvesting module, i.e., supplies power for the terminal 610.

The CN device 630 is configured for data processing, data reception, and control and management of terminal 610 related services, mobility, user-plane, control-plane, gateway, and other functions.

FIG. 8 is a flow chart of a transmission method for a power saving signal provided in an example embodiment of the present disclosure. The embodiment is exemplarily described by applying the method to a terminal. The method includes the following.

**At operation 202,** a terminal determines a transmission manner for a power saving signal.

The power saving signal indicates a receiving manner for a paging signal and/or a monitoring manner for a control channel.

Take the paging signal as an example, one power saving signal indicates whether UEs of one or more paging subgroups receive paging at corresponding paging occasion (PO). The power saving signal indicates that paging is received or not received.

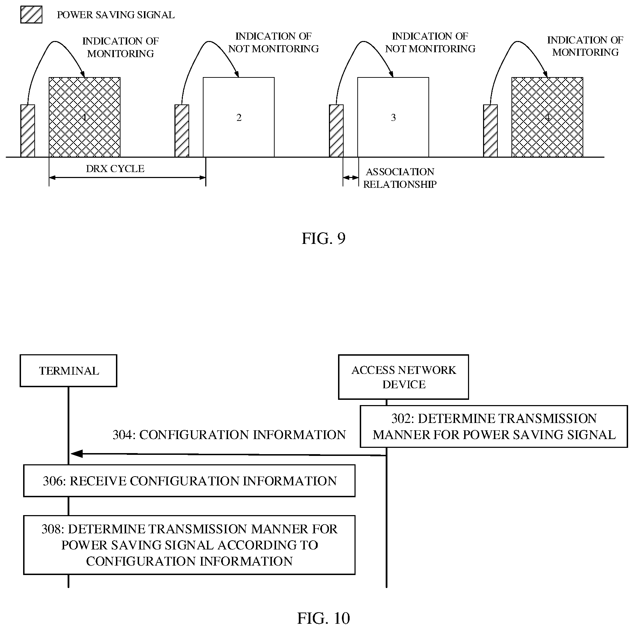

Take a physical downlink control channel (PDCCH) as an example, one power saving signal indicates whether the PDCCH is monitored in an on duration in one discontinuous reception (DRX) cycle. As illustrated in FIG. 9, each of on duration 1 to on duration 4 in respective DRX cycles corresponds to one power saving signal. Timing relationship between the power saving signal and the control channel is fixed. In the case where the power saving signal is a first indication, the UE performs monitoring during the following on duration in the current DRX cycle, and in the case where the power saving signal is a second indication, the UE does not perform monitoring during the following on duration in the current DRX cycle. The power saving signal indicates at least one of the following situations:
monitoring the control channel;
not monitoring the control channel;
monitoring the control channel by using a specified search space set/set group;
monitoring the control channel by switching from a current search space set/set group to another search space set/set group; or
skipping a monitoring occasion for the control channel (optionally also indicates a skipping duration).

The transmission manner for the power saving signal includes a first transmission manner or a second transmission manner, where the first transmission manner is different from the second transmission manner in a parameter of at least one of a waveform, a modulation mode, a coding mode, or a multiple access mode. As an example, power consumption in the first transmission manner for the power saving signal is less than power consumption in the second transmission manner for the control channel.

The first transmission manner is a transmission manner corresponding to a wake-up receiver. As an example, the first transmission manner is a transmission manner corresponding to a zero-power receiver, and/or the first transmission manner is a transmission manner corresponding to a low-power receiver.

The second transmission manner is a transmission manner corresponding to a traditional primary receiver, or a transmission manner corresponding to a regular receiver, or a transmission manner corresponding to a receiver other than the zero-power receiver and the low-power receiver.

The modulation mode in the first transmission manner includes any one of: amplitude shift keying (ASK), frequency shift keying (FSK), or 2 phase-shift keying (2PSK). The modulation mode in the second transmission manner includes any one of: orthogonal frequency-division multiplexing (OFDM), quadrature phase-shift keying (QPSK), or quadrature amplitude modulation (QAM).

The ASK is a digital modulation in which amplitude of a carrier varies with a digital baseband signal. When the digital baseband signal is binary, the ASK is binary amplitude shift keying (2ASK). The 2ASK is also referred to as on-off keying (OOK), where on and off of a sinusoidal carrier is controlled with a bipolar non-return-to-zero code sequence. Optionally, the ASK further includes 4ASK, 8ASK, and the like, which is not limited in the embodiment.

The FSK is a digital modulation in which a frequency of the carrier varies with the digital baseband signal. When the digital baseband signal is binary, the FSK is binary frequency shift keying (2FSK). Information is transmitted in the 2FSK by transforming two different carrier signals into digital signals. In 2FSK, a state of the transmitted information is represented by a change in a carrier frequency, and a frequency of the modulated carrier varies with the binary sequence of 0 and 1. Optionally, the FSK further includes 4FSK, 8FSK, and the like, which is not limited in the embodiment.

PSK is a digital modulation in which a phase of the carrier varies with the digital baseband signal. The 2PSK is the simplest form of phase-shift keying. In the 2PSK, two carriers are used to transmit binary information, where initial phases of the two carriers are 180° apart. The 2PSK is also referred to as BPSK. The QPSK is quadrature phase-shift keying, where four different phase differences of the carriers are used to represent inputted digital information.

The OFDM is a type of multi carrier modulation (MCM). The main principle of the OFDM is to divide a channel into several orthogonal sub-channels, and convert a high speed data signal into parallel low speed sub data streams to modulate onto respective sub-channels for transmission. The OFDM includes V-OFDM, W-OFDM, F-OFDM, MIMO-OFDM, multi-band OFDM, and so on, which is not limited in the embodiment.

The QAM is a double-sideband modulation in which two independent baseband digital signals are used to suppress two mutually orthogonal carriers of the same frequency. Two parallel digital information transmission are achieved based on the nature of frequency spectrum orthogonality of modulated signals in the same bandwidth. The QAM is a modulation technology that combines multiple amplitude shift keying (MASK) and multiple phase shift keying (MPSK), which can double the bandwidth.

The first transmission manner uses a simple and low-order digital modulation mode. The second transmission manner uses a relatively complex, high-order, and orthogonal digital modulation mode. Signal complexity in the first transmission manner is less than that in the second transmission manner.

It is noted that the modulation mode in the first transmission manner and the modulation mode in the second transmission manner illustrated in the above embodiments are only examples and should not constitute any limitation of the present disclosure. The use of other existing or future-defined modulation modes is not excluded for the first transmission manner or the second transmission manner.

The first transmission manner and the second transmission manner have different coding modes. The coding mode in the first transmission manner includes any one of: NRZ coding, Manchester code, URZ coding, DBP coding, Miller coding, or differential coding. The coding mode in the second transmission manner includes any one of: Reed-Muller (RM) code, tail biting convolutional code (TBCC), turbo code, outer code, low density parity check code (LDPC), or polar code.

The first transmission manner and the second transmission manner have different multiple access modes. The multiple access mode in the first transmission manner includes any one of: frequency-division multiple access (FDMA), time-division multiple access (TDMA), or code-division multiple access (CDMA). The multiple access mode in the second transmission manner includes orthogonal frequency-division multiple access (OFDMA) or discrete fourier transform-spread-orthogonal frequency-division multiplexing (DFT-Spread OFDM, DFTS-OFDM).

It is understood that the signal waveforms generated using different modulation modes are different. In embodiments of the present disclosure, the first transmission manner and the second transmission manner have different modulation modes and thus result in different waveforms.

In summary, in the method provided in the present embodiment, the terminal and/or a network device perform transmission of the power saving signal in an appropriate transmission manner, e.g., in the case where the power consumption in the first transmission manner is less than the power consumption in the second transmission manner under the same conditions, the terminal and/or the network device perform transmission of the power saving signal in the first transmission manner when capable, so as to achieve better power saving. The UE in the connected state thus can have better performance in power saving, thereby improving the endurance time of the UE.

It is noted that the transmission manner for the power saving signal can be understood as a sending manner for the power saving signal and/or a receiving manner for the power saving signal. The power saving signal can also be referred to as a wake-up signal and the like.

In an optional embodiment based on FIG. 8, the manner in which the terminal determines the transmission manner for the power saving signal includes at least one of:
the terminal determines the transmission manner for the power saving signal based on configuration information sent by a base station;
the terminal reports auxiliary information to the base station and the base station determines the transmission manner for the power saving signal; or
the terminal itself determines the transmission manner for the power saving signal.

Three embodiments are used for illustrating the foregoing three manners as follows.

**The case of determining the transmission manner for the power saving signal based on configuration information sent by the base station is as follows.**

FIG. 10 is a flow chart of a transmission method for a power saving signal provided in an example embodiment of the present disclosure. The embodiment is exemplarily described by applying the method to a terminal and a network device. The method includes the following.

### Network Device Side

**At operation 302,** the network device determines the transmission manner for the power saving signal.

When determining the transmission manner for the power saving signal, the network device may consider at least one of the following factors:
cell coverage size;
whether the terminal is located within signal coverage under the first transmission manner, for example, the signal coverage under the first transmission manner includes coverage of a wireless power supply signal;
UE capability of the terminal (whether the terminal has a wake-up receiver);
proportion of the number of terminals having the wake-up receiver to the number of all terminals in the cell;
whether the network device has a capability to send the wireless power supply signal; or
resource overhead for usage of the wireless power supply signal.

As an example, the network device may configure the transmission manner for the power saving signal according to an actual situation of the cell, such as the size of the cell and the capability of the UE accessing the cell.

An actual cell deployment includes a variety of deployment scenarios. For example, in a central city dense coverage scenario or an indoor coverage scenario, the coverage of the cell is relatively small, ranging from tens of meters to hundreds of meters. In an IoT application scenario, a cell is often used to cover an industrial plant, a storage station, a farm, etc., and the cell is also relatively small. In these cases, the network device can configure an appropriate transmission manner for the power saving signal according to the size of the cell. For example, when the coverage of the cell is less than 100 meters, the network device can configure that the wireless power supply signal carries the power saving signal for reception by the terminal having the wake-up receiver, so as to achieve a power saving function.

The network device determines whether to configure that the power saving signal is sent via the wireless power supply signal, further based on whether the terminal accessing the cell has the wake-up receiver and based on the proportion of the terminals having the wake-up receivers. When the terminal accessing the cell does not have the wake-up receiver or the proportion of the terminals having the wake-up receivers is too low, the network device may not configure that the power saving signal is sent via the wireless power supply signal, but may configure using a NR transmission channel to send the power saving signal.

In fact, the network device may consider together the above two factors when determining the transmission manner for the power saving signal. Additional factors are not excluded. For example, when determining the transmission manner for the power saving signal, the network device may consider whether the network device has the capability to send the wireless power supply signal, the resource overhead for usage of the wireless power supply signal, and so on.

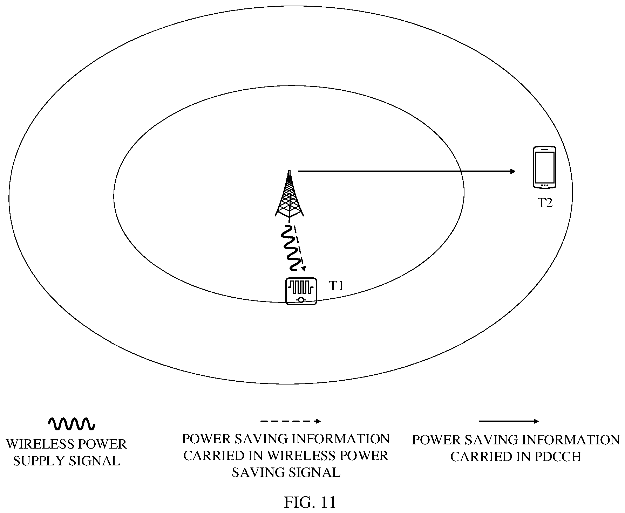

As illustrated schematically in FIG. 11, the coverage of the wireless power supply signal is smaller than coverage of a PDCCH channel in the cell. Terminal T1 having the wake-up receiver is within the coverage of the wireless power supply signal and can receive the power saving signal via the wake-up receiver. Terminal T2 is outside the coverage of the wireless power supply signal and thus can only receive the power saving signal via the PDCCH, regardless of whether terminal T2 has the wake-up receiver or not.

**At operation 304**, the network device sends the configuration information.

As an example, the above configuration information is carried in one or more of: a system message (or a system broadcast or a broadcast message), a radio resource control (RRC) signaling, a medium access control (MAC) layer signaling, or a physical layer (PHY) signaling. The configuration information can be common configuration information that is applicable to all UEs in the cell, or the configuration information can be UE-specific configuration information that is applicable to a specific UE.

### Terminal Side

**At operation 306**, the terminal receives the configuration information.

The terminal receives the configuration information sent by the network device. The configuration information carries the transmission manner for the power saving signal, or the configuration information carries the transmission manner for the power saving signal.

For example, one bit is used in the configuration information to indicate the transmission manner for the power saving signal. When the bit takes a first value, the first transmission manner is used for transmission of the power saving signal. When the bit takes a second value, a second transmission manner is used for transmission of the power saving signal.

As an example, the first transmission manner is a transmission manner corresponding to the wake-up receiver, and the second transmission manner is a transmission manner corresponding to a traditional receiver.

As an example, the above configuration information is carried in one or more of: the system message, the RRC signaling, the MAC layer signaling, or the PHY signaling. The configuration information can be the common configuration information that is applicable to all UEs in the cell, or the configuration information can be the UE-specific configuration information that is applicable to the specific UE.

**At operation 308**, the terminal determines the transmission manner for the power saving signal according to the configuration information.

The terminal determines the transmission manner or a sending manner or a receiving manner for the power saving signal according to the bit in the configuration information.

In summary, in the method provided in the present embodiment, by receiving the configuration information sent by the base station, the terminal can determine the transmission manner for the power saving signal, so as to send or receive the power saving signal in an appropriate transmission manner. For example, in the case where power consumption in the first transmission manner is less than power consumption in the second transmission manner under the same conditions, the terminal performs transmission of the power saving signal in the first transmission manner when capable, so as to achieve better power saving. The UE in the connected state thus can have better performance in power saving, thereby improving the endurance time of the UE.

The case where the terminal itself determines the transmission manner for the power saving signal is as follows.

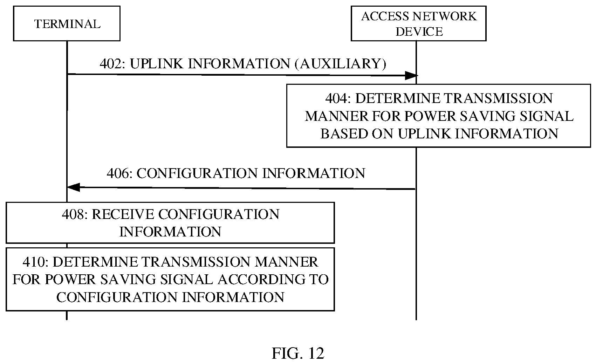

FIG. 12 is a flow chart of a transmission method for a power saving signal provided in an example embodiment of the present disclosure. The embodiment is exemplarily described by applying the method to a terminal and a network device. The method includes the following.

The network device may not be aware of a location of the terminal in a cell and whether the terminal is within a coverage of a wireless power supply signal. In the embodiment, the network device needs to determine the transmission manner for the power saving signal according to a feedback from the network device.

**At operation 402,** the terminal sends uplink information.

The uplink information is used to assist the network device in determining the transmission manner for the power saving signal.

As an example, a manner in which the terminal sends the uplink information to the network device includes at least one of the following four manners.
1. The terminal sends a measurement result for a reference signal.

The reference signal includes a channel-slate information reference signal (CSI-RS), a demodulation reference signal (DM-RS), or a synchronisation signaling block (SSB), etc. The measurement result may include path loss, reference signal received power (RSRP), reference signal received quality (RSRQ), signal-to-noise ratio (SNR), etc. Based on the measurement result for the reference signal, the network device can determine a coverage state of the terminal so as to determine whether the terminal is within the coverage of the wireless power supply signal.

2. The terminal sends the uplink information via an uplink channel.

This uplink information carries at least one of the following information:
capability information about whether the terminal has a wake-up receiver; or
whether the terminal is within the signal coverage under the first transmission manner.

The uplink channel includes, but is not limited to, at least one of: a physical uplink control channel (PUCCH), a physical uplink shared channel (PUSCH), or a physical random access channel (PRACH).

3. The terminal sends the uplink information via a backscatter signal.

4. The terminal sends feedback information for a triggering signal.

Optionally, the triggering signal is a signal sent in the first transmission manner. For example, the triggering signal is a signal sent by the network device via the wireless power supply signal.

In the case where the terminal receives the triggering signal, the terminal sends the feedback information via the backscatter signal or via the uplink channel.

The uplink channel includes, but is not limited to, at least one of: the PUCCH, the PUSCH, or the PRACH.

As an example, the network device may send corresponding triggering information carried in the wireless power supply signal to a wake-up receiver of an UE. If the UE is within the coverage of the wireless power supply signal, the UE may send the feedback information via the backscatter signal by the wake-up receiver. A wake-up module including the wake-up receiver not only has a capability to receive the power saving signal but also has the capability of backscattering. The wake-up module, using energy provided by the wireless power supply signal, modulates and backscatters an incoming signal to carry the feedback information via the backscatter signal. Alternatively, the terminal may further send the feedback information via a traditional NR channel, such as the PUCCH, the PUSCH, the PRACH, etc.

**At operation 404,** the network device determines the transmission manner for the power saving signal based on the uplink information.

The network device determines the transmission manner for the power saving signal based on the uplink information. In an example, at least in the case where the terminal has the wake-up receiver and the terminal is within the signal coverage under the first transmission manner, the network device determines that the transmission manner for the power saving signal is the first transmission manner. Otherwise, the network device determines that the transmission manner for the power saving signal is a second transmission manner.

**At operation 406,** the network device sends configuration information.

As an example, the above configuration information is carried in one or more of: a system message (or a system broadcast or a broadcast message), an RRC signaling, a MAC layer signaling, or a PHY signaling. The configuration information can be common configuration information that is applicable to all UEs in the cell, or the configuration information can be UE-specific configuration information that is applicable to a specific UE.

**At operation 408,** the terminal receives the configuration information.

The terminal receives the configuration information sent by the network device. The configuration information carries the transmission manner for the power saving signal, or the configuration information carries the transmission manner for the power saving signal.

For example, one bit is used in the configuration information to indicate the transmission manner for the power saving signal. When the bit takes a first value, the first transmission manner is used for transmission of the power saving signal. When the bit takes a second value, the second transmission manner is used for transmission of the power saving signal.

As an example, the first transmission manner is a transmission manner corresponding to the wake-up receiver, and the second transmission manner is a transmission manner corresponding to a traditional receiver.

As an example, the above configuration information is carried in one or more of: the system message, the RRC signaling, the MAC layer signaling, or the PHY signaling. The configuration information can be the common configuration information that is applicable to all UEs in the cell, or the configuration information can be the UE-specific configuration information that is applicable to the specific UE.

**At operation 410**, the terminal determines the transmission manner for the power saving signal according to the configuration information.

The terminal determines the transmission manner or a sending manner or a receiving manner for the power saving signal according to the bit in the configuration information.

In summary, in the method provided in the present embodiment, by receiving the configuration information sent by the base station, the terminal can determine the transmission manner for the power saving signal so as to send or receive the power saving signal in an appropriate transmission manner. For example, in the case where power consumption in the first transmission manner is less than power consumption in the second transmission manner under the same conditions, the terminal performs transmission of the power saving signal in the first transmission manner when capable, so as to achieve better power saving. The UE in the connected state thus can have better performance in power saving, thereby improving the endurance time of the UE.

**The case where the terminal reports auxiliary information to the base station and the base station determines the transmission manner for the power saving signal is as follows.**

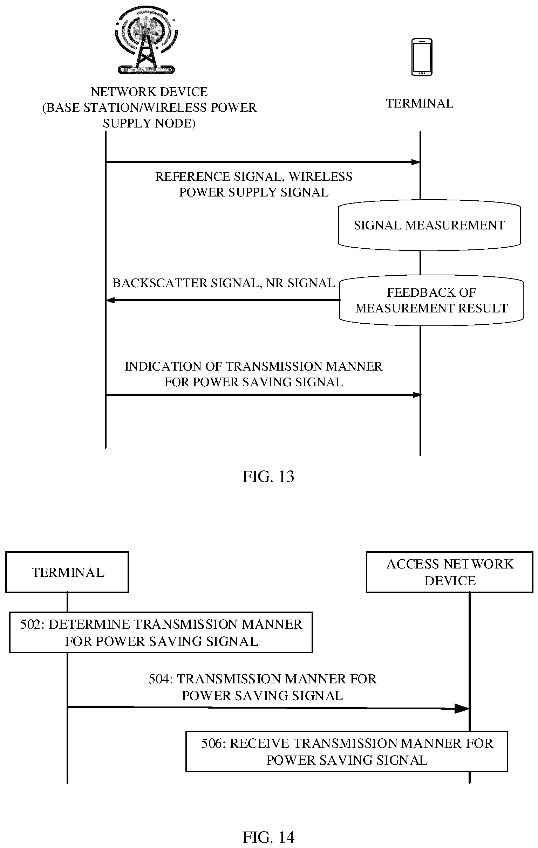

FIG. 14 is a flow chart of a transmission method for a power saving signal provided in an example embodiment of the present disclosure. The embodiment is exemplarily described by applying the method to a terminal and a network device. The method includes the following.

The network device may not be aware of a location of the terminal in a cell and whether the terminal is within a signal coverage under the first transmission manner. In the embodiment, the network device needs to determine the transmission manner for the power saving signal according to a feedback from the terminal.

A signal coverage under the first transmission manner may be represented by the coverage of the wireless power supply signal.

**At operation 502,** the terminal itself determines the transmission manner for the power saving signal.

The transmission manner for the power saving signal may be determined by the terminal itself. The terminal may measure a reference signal in a cell, determine the transmission manner for the power saving signal according to a measurement result, and indicate the transmission manner for the power saving signal to the base station. In an example, at least in the case where the terminal has a wake-up receiver and the terminal is within the coverage of the wireless power supply signal, the terminal determines that the transmission manner for the power saving signal is the first transmission manner. Otherwise, the network device determines that the transmission manner for the power saving signal is a second transmission manner.

Optionally, the reference signal includes a CSI-RS, a DM-RS, or a SSB, etc. The measurement result may include path loss, RSRP, RSRQ, SNR, etc. Based on the measurement result for the reference signal, the UE determines the transmission manner for the power saving signal and feedbacks the transmission manner for the power saving signal to the network device.

Optionally, the terminal may further measure the wireless power supply signal, such as measuring a received power, a received signal strength, and the like of the wireless power supply signal. According to the measurement result for the wireless power supply signal, the terminal determines the transmission manner for the power saving signal and feedbacks the transmission manner for the power saving signal to the network device.

Optionally, the network device configures a threshold value to the terminal in advance. The terminal obtains the threshold value configured by the network device. Based on a magnitude comparison between the measurement result for the reference signal and the threshold value or a magnitude comparison between the measurement result for the wireless power supply signal and the threshold value, the terminal determines the transmission manner for the power saving signal. For example, in the case where the measurement result for the reference signal is greater than the threshold value or the measurement result for the wireless power supply signal is greater than the threshold value, the terminal determines that the transmission manner for the power saving signal is the first transmission manner. In the case where the measurement result for the reference signal is less than the threshold value or the measurement result for the wireless power supply signal is less than the threshold value, the terminal determines that the transmission manner for the power saving signal is the second transmission manner.

**At operation 504,** the terminal reports the transmission manner for the power saving signal.

The foregoing transmission manner for the power saving signal is carried in one or more of: a PRACH, an RRC signaling, a physical layer signaling, or a backscatter signal. As an example, when the terminal determines the transmission manner for the power saving signal, the terminal may indicate the transmission manner for the power saving signal to the base station in the following manner.

### 1. Via the PRACH

In an initial access procedure for the terminal, the terminal may select a corresponding PRACH resource according to the measurement result to send the PRACH. According to difference PRACH resources, the network device identifies request information of the terminal for the transmission manner for the power saving signal and thus obtains the transmission manner for the power saving signal requested or suggested by the terminal. The PRACH resource includes a preamble, a random access occasion (RO), and an uplink bandwidth part (BWP) where the PRACH resource is located. Based on different PRACH resources selected by the terminal, the terminal implicitly indicates the transmission manner for the power saving signal requested by the terminal.

The PRACH resource has a correspondence with the SSB. The correspondence between the PRACH resource and the SSB is determined based on a parameter configured by a network. The terminal selects the PRACH resource corresponding to an appropriate SSB to initiate random access. For example, one RO corresponds to one SSB, the maximum number of preambles within the RO is 64. In the case where the preambles indicate the transmission manner for the power saving signal, the preambles can be configured as different sets corresponding to different transmission manners for the power saving signal.

The PRACH resources corresponding to different transmission manners for the power saving signal can also be different ROs or different uplink BWPs. That is, different transmission manners for the power saving signal are indicated by different time-frequency resources of the PRACH.

### 2. Via the RRC Signaling

When the terminal establishes an RRC connection with the network, the terminal can report the transmission manner for the power saving signal requested by the terminal via the RRC signaling. The network device can also respond to the request via the RRC signaling.

### 3. Via the Physical Layer Signaling

For the terminal in a connected state, the coverage of the wireless power supply signal on the terminal changes due to mobility of the terminal. A transmission manner for the power saving signal desired by the terminal also changes. When the transmission manner for the power saving signal determined by the terminal based on the measurement result changes, the terminal can timely feedback to the network device via the physical layer signaling. The physical layer signaling can be uplink control information (UCI) carried in a PUCCH or a PUSCH.

### 4. Via the Backscatter Signal

The terminal may send the request for the transmission manner for the power saving signal via the backscatter signal.

**At operation 506,** the network device receives the transmission manner for the power saving signal.

The network device receives the transmission manner for the power saving signal sent by the terminal.

For example, the terminal uses one bit to report the transmission manner for the power saving signal. When the bit takes a first value, the first transmission manner is used for transmission of the power saving signal. When the bit takes a second value, the second transmission manner is used for transmission of the power saving signal.

As an example, the first transmission manner is a transmission manner corresponding to the wake-up receiver, and the second transmission manner is a transmission manner corresponding to a traditional receiver.

In summary, in the method provided in the present embodiment, by receiving the configuration information sent by the base station, the terminal can determine the transmission manner for the power saving signal so as to send or receive the power saving signal in an appropriate transmission manner. For example, in the case where power consumption in the first transmission manner is less than power consumption in the second transmission manner under the same conditions, the terminal perform transmission of the power saving signal in the first transmission manner when capable, so as to achieve better power saving. The UE in the connected state thus can have better performance in power saving, thereby improving the endurance time of the UE.

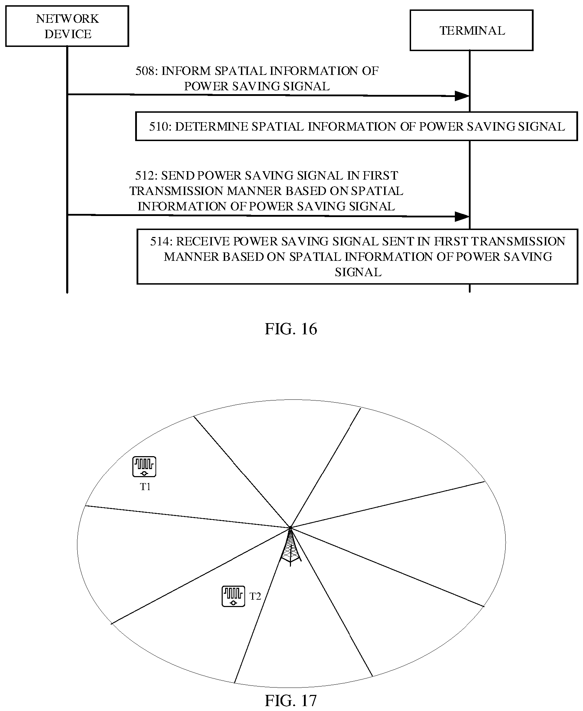

In an optional embodiment based on the above three embodiments, transmission of the power saving signal in the first transmission manner optionally includes the following operations 508 to 514 illustrated in FIG. 16.

**At operation 508,** the network device explicitly or implicitly informs the terminal of spatial information of the power saving signal.

The power saving signal can have a quasi-co-location (QCL) relationship with the SSB (or the CSI-RS). The terminal receives a signal or a channel according to the spatial information. That is, under the first transmission manner for the power saving signal based on the wake-up receiver, the terminal further needs to determine the spatial information of the power saving signal.

In the process of sending the power saving signal in the first transmission manner, the network device sends the power saving signal on a beam having a certain direction. The network device may generate QCL information between the power saving signal and the SSB (or CSI-RS) as the spatial information of the power saving signal. For example, the base station determines the QCL information according to a beam management result, or the base station may determine the QCL information according to the SSB corresponding to the PRACH sent by the terminal, or the base station determines the QCL information according to a CSI feedback from the terminal, or the like.

**At operation 510,** the terminal determines the spatial information of the power saving signal.

The terminal determines the QCL information according to the beam management result, or the terminal determines the QCL information according to the SSB corresponding to the PRACH, or the terminal determines the QCL information according to the CSI feedback, or the like.

**At operation 512,** the network device sends the power saving signal in the first transmission manner based on the spatial information of the power saving signal.

**At operation 514,** the terminal receives the power saving signal sent in the first transmission manner based on the spatial information of the power saving signal.

With reference to FIG. 17 in combination, each power saving signal is sent in accordance with a respective coverage area. Eight areas are illustrated in the figure as an example. Each of terminal T1 and terminal T2 having the wake-up receivers is within the coverage of the power saving signal in a different coverage area. Terminal T1 receives the power saving signal sent in the first transmission manner based on first spatial information. Terminal T2 receives the power saving signal sent in the first transmission manner based on second spatial information.

In summary, under the first transmission manner for the power saving signal based on the wake-up receiver, the network device sends the power saving signal only in a certain space, so as to improve a signal strength of the power saving signal arriving at the UE and improve the coverage distance of the power saving signal.

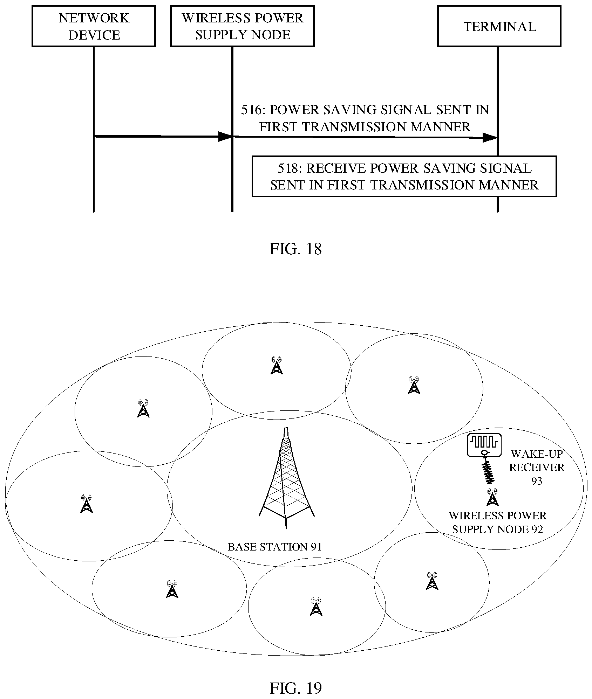

In an optional embodiment based on the above three embodiments, transmission of the power saving signal in the first transmission manner optionally includes the following operations 516 to 518 illustrated in FIG. 18.

**At operation 516,** the network device sends the power saving signal in the first transmission manner via a wireless power supply node.

When the network device directly supplies wireless power, the coverage distance of the power saving signal based on the wake-up receiver is relatively short, only reaching a range of tens of meters to a hundred meters.

To further enhance the network coverage of the power saving signal, a dedicated wireless power supply node may be deployed to power the wake-up receiver. The wireless power supply node is a node physically located outside the network device. As illustrated in FIG. 19, in a cell coverage of a base station 91, a dedicated wireless power supply node 92 is added to send the wireless power supply signal and to send the power saving signal based on the wireless power supply signal, thereby improving the coverage of the power saving signal. The terminal having a wake-up receiver 93 can receive the power saving signal sent by the nearby wireless power supply node 92.

**At operation 518,** the terminal receives the power saving signal sent by the wireless power supply node in the first transmission manner.

In summary, under the first transmission manner for the power saving signal based on the wake-up receiver, the network device uses an additional wireless power supply node to send the power saving signal, so as to improve the signal strength of the power saving signal arriving at the UE and improve the coverage distance of the power saving signal.

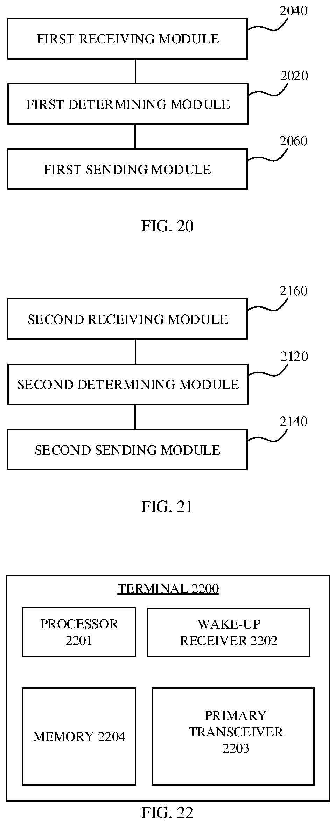

FIG. 20 is a block diagram of a transmission apparatus for a power saving signal provided in an example embodiment of the present disclosure. The apparatus includes a first determining module 2020. The first determining module 2020 is configured to determine a transmission manner for the power saving signal. The transmission manner includes a first transmission manner or a second transmission manner, where the first transmission manner is different from the second transmission manner in a parameter of at least one of a waveform, a modulation mode, a coding mode, or a multiple access mode.

In some embodiments, the apparatus further includes a first receiving module 2040. The first receiving module 2040 is configured to receive configuration information. The first determining module 2020 is configured to determine the transmission manner for the power saving signal according to the configuration information.

In some embodiments, the configuration information is carried in at least one of: a system message, an RRC signaling, a MAC layer signaling, or a physical layer signaling.

In some embodiments, the apparatus further includes a first sending module 2060. The first sending module 2060 is configured to send uplink information, where the uplink information is used to assist a network device in determining the transmission manner for the power saving signal.

In some embodiments, the first sending module 2060 is configured to send the uplink information via an uplink channel, or the first sending module 2060 is configured to send the uplink information via a backscatter signal.

In some embodiments, the uplink information includes a measurement result for a reference signal or feedback information for a triggering signal, where the triggering signal is sent by the network device in the first transmission manner.

In some embodiments, the uplink channel includes at least one of: a PUCCH, a PUSCH, or a PRACH.

In some embodiments, the first sending module 2060 is configured to determine the transmission manner for the power saving signal on its own.

In some embodiments, the first sending module 2060 is configured to determine the transmission manner for the power saving signal based on the measurement result for the reference signal or a measurement result for a wireless power supply signal.

In some embodiments, the apparatus further includes the first receiving module 2040 configured to obtain a threshold value configured by the network device. The first determining module 2020 is configured to determine the transmission manner for the power saving signal based on a magnitude comparison between the measurement result for the reference signal and the threshold value or a magnitude comparison between the measurement result for the wireless power supply signal and the threshold value.

In some embodiments, the apparatus further includes the first sending module 2060 configured to report the transmission manner for the power saving signal.

In some embodiments, the transmission manner for the power saving signal is carried in at least one of the following transmission resources: the PRACH, the RRC signaling, the physical layer signaling, or the backscatter signal.

In some embodiments, the apparatus further includes the first receiving module 2040 configured to receive the power saving signal sent in the first transmission manner.

In some embodiments, the first determining module 2020 is further configured to determine spatial information of the power saving signal, and the first receiving module 2040 is configured to receive the power saving signal sent in the first transmission manner based on the spatial information of the power saving signal.

In some embodiments, the first receiving module 2040 is configured to receive the power saving signal sent by a wireless power supply node in the first transmission manner.

FIG. 21 is a block diagram of a transmission apparatus for a power saving signal. The apparatus includes a second determining module 2120. The second determining module 2120 is configured to determine a transmission manner for a power saving signal. The transmission manner includes a first transmission manner or a second transmission manner, where the first transmission manner is different from the second transmission manner in a parameter of at least one of a waveform, a modulation mode, a coding mode, or a multiple access mode.

In some embodiments, the apparatus further includes a second sending module 2140. The second sending module 2140 is configured to send configuration information to a terminal, where the configuration information is used to configure the transmission manner for the power saving signal.

In some embodiments, the configuration information is carried in at least one of: a system message, an RRC signaling, a MAC layer signaling, or a physical layer signaling.

In some embodiments, the apparatus further includes a second receiving module 2160. The second receiving module 2160 is configured to receive uplink information sent by the terminal. The second determining module 2120 is configured to determine the transmission manner for the power saving signal based on the uplink information.

In some embodiments, the second receiving module 2160 is configured to receive, via an uplink channel, the uplink information sent by the terminal, or the second receiving module 2160 is configured to receive, via a backscatter signal, the uplink information sent by the terminal.

In some embodiments, the uplink information includes a measurement result for a reference signal or feedback information for a triggering signal, where the triggering signal is sent by the network device in the first transmission manner.

In some embodiments, the uplink channel includes at least one of: a PUCCH, a PUSCH, or a PRACH.

In some embodiments, the second determining module 2120 is configured to determine the transmission manner for the power saving signal based on information reported by the terminal.

In some embodiments, the apparatus further includes the second sending module 2140 configured to configure a threshold value to the terminal, where the threshold value is a threshold used by the terminal when the terminal determines the transmission manner for the power saving signal based on the measurement result for the reference signal or a measurement result for a wireless power supply signal.

In some embodiments, the transmission manner for the power saving signal is carried in at least one of the following transmission resources: the PRACH, the RRC signaling, the physical layer signaling, or the backscatter signal.

In some embodiments, the second sending module 2140 is configured to send the power saving signal in the first transmission manner.

In some embodiments, the apparatus further includes the second sending module 2140 configured to inform the terminal of spatial information of the power saving signal. The second sending module 2140 is configured to send the power saving signal in the first transmission manner based on the spatial information of the power saving signal.

In some embodiments, the second sending module 2140 is configured to send the power saving signal in the first transmission manner via the wireless power supply node.

It is noted that, when the apparatus provided in the foregoing embodiments implements its functions, the division into the above functional modules is taken only as an example for illustration. In practice, the above functions can be allocated to different functional modules according to actual needs, that is, the structure of the device is divided into different functional modules to complete all or some of the functions described above.

Regarding the apparatus in the foregoing embodiments, the manner in which each module performs operations has been described in detail in the related method embodiments and thus will not be elaborated again herein.

FIG. 22 is a schematic block diagram of a terminal provided in an embodiment of the present disclosure. The terminal may include a processor 2201, a wake-up receiver 2202, a primary receiver 2203, and a memory 2204.

The processor 2201 includes one or more processing cores, and the processor 2201 performs various functional applications by running software programs and modules.

The wake-up receiver 2202 includes a zero-power receiver or a low-power receiver. The low power receiver is a receiver that consumes less power than a predetermined condition. As an example, power consumption of the low-power receiver is less than power consumption of a traditional receiver in the transceiver 2203. Accordingly, the wake-up receiver 2202 may further correspond to a wake-up transmitter. The wake-up transmitter is independent of the wake-up receiver 2202, or the wake-up transmitter is integrated into the wake-up receiver 2202 to be a wake-up transceiver.

The primary transceiver 2203 may be configured to receive and send information. The primary transceiver 2203 may be a communication chip. The primary transceiver 2203 may be implemented independently as a traditional transmitter and a traditional receiver. The traditional receiver is a primary receiver relative to the wake-up receiver 2202.

The memory 2204 is configured to store a computer program. The processor 2201 is configured to execute the computer program to implement various operations performed by the terminal in the method embodiment described above.

In some embodiments, the processor 2201 is configured to determine a transmission manner for a power saving signal. The transmission manner includes a first transmission manner or a second transmission manner, where the first transmission manner is different from the second transmission manner in a parameter of at least one of a waveform, a modulation mode, a coding mode, or a multiple access mode.

In some embodiments, the primary receiver is configured to receive configuration information.

The processor 2201 is configured to determine the transmission manner for the power saving signal based on the configuration information.

In some embodiments, the configuration information is carried in at least one of: a system message, an RRC signaling, a MAC layer signaling, or a physical layer signaling.

In some embodiments, a primary transmitter or the wake-up transmitter is configured to send uplink information. The uplink information is used to assist a network device in determining the transmission manner for the power saving signal.

In some embodiments, the primary transmitter is configured to send the uplink information via an uplink channel, or the wake-up transmitter is configured to send the uplink information via a backscatter signal.

In some embodiments, the uplink information includes a measurement result for a reference signal or feedback information for a triggering signal. The triggering signal is sent by the network device in the first transmission manner.

In some embodiments, the uplink channel includes at least one of: a PUCCH, a PUSCH, or a PRACH.

In some embodiments, the processor 2201 is configured to determine on its own the transmission manner for the power saving signal.

In some embodiments, the processor 2201 is configured to determine the transmission manner for the power saving signal based on the measurement result for the reference signal or a measurement result for a wireless power supply signal.

In some embodiments, the processor 2201 is configured to obtain a threshold value configured by the network device and determine the transmission manner for the power saving signal based on a magnitude comparison between the measurement result for the reference signal and the threshold value or a magnitude comparison between the measurement result for the wireless power supply signal and the threshold value.

In some embodiments, the primary transmitter or the wake-up transmitter is configured to report the transmission manner for the power saving signal.

In some embodiments, the transmission manner for the power saving signal is carried in at least one of the following transmission resources: the PRACH, the RRC signaling, the physical layer signaling, or the backscatter signal.

In some embodiments, the wake-up receiver 2202 is configured to receive the power saving signal sent in the first transmission manner.

In some embodiments, the processor 2201 is configured to determine spatial information of the power saving signal.

The wake-up receiver 2202 is configured to receive, based on the spatial information of the power saving signal, the power saving signal sent in the first transmission manner.

In some embodiments, the wake-up receiver 2202 is configured to receive the power saving signal sent by the wireless power supply node in the first transmission manner.

In addition, the memory 2204 may be implemented by any type of volatile storage device or non-volatile storage device or a combination thereof. The volatile or non-volatile storage device includes, but is not limited to, a random access memory (RAM), a read-only memory (ROM), an erasable programmable read-only memory (EPROM), an electrically erasable programmable read-only memory (EEPROM), a flash memory or other solid state storage devices, a compact disc ROM (CD-ROM), a digital video disc (DVD) or other optical storage, magnetic cassettes, magnetic tape, magnetic disk storage, or other magnetic storage devices.

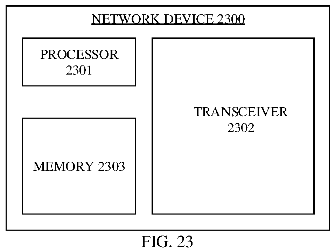

FIG. 23 is a schematic block diagram of a network device provided in an embodiment of the present disclosure. The network device may include a processor 2301, a transceiver 2302, and a memory 2303.

The processor 2301 includes one or more processing cores, and the processor 2301 performs various functional applications by running software programs and modules.

The transceiver 2302 may be configured to receive and send information. The transceiver 2302 may be a communication chip. The transceiver 2302 may be implemented independently as a transmitter and a receiver.

The memory 2303 is configured to store a computer program. The processor 2301 is configured to execute the computer program to implement various operations performed by the network device in the method embodiment described above.

In some embodiments, the processor 2301 is configured to determine a transmission manner for the power saving signal. The transmission manner includes a first transmission manner or a second transmission manner, where the first transmission manner is different from the second transmission manner in a parameter of at least one of a waveform, a modulation mode, a coding mode, or a multiple access mode.

In some embodiments, the transceiver 2302 is configured to send configuration information to a terminal. The configuration information is used to configure the transmission manner for the power saving signal.

In some embodiments, the configuration information is carried in at least one of: a system message, an RRC signaling, a MAC layer signaling, or a physical layer signaling.

In some embodiments, the transceiver 2302 is configured to receive uplink information sent by the terminal.

The processor 2301 is configured to determine the transmission manner for the power saving signal based on the uplink information.

In some embodiments, the transceiver 2302 is configured to receive, via an uplink channel, the uplink information sent by the terminal, or the transceiver 2302 is configured to receive, via a backscatter signal, the uplink information sent by the terminal.

In some embodiments, the uplink information includes a measurement result for a reference signal or feedback information for a triggering signal. The triggering signal is sent by the network device in the first transmission manner.

In some embodiments, the uplink channel includes at least one of: a PUCCH, a PUSCH, or a PRACH.

In some embodiments, the processor 2301 is configured to determine the transmission manner for the power saving signal based on information reported by the terminal.

In some embodiments, the transceiver 2302 is configured to configure a threshold value to the terminal. The threshold value is a threshold used by the terminal when the terminal determines the transmission manner for the power saving signal based on the measurement result for the reference signal or a measurement result for a wireless power supply signal.

In some embodiments, the transmission manner for the power saving signal is carried in at least one of: the PRACH, the RRC signaling, the physical layer signaling, or the backscatter signal.

In some embodiments, the transceiver 2302 is configured to send the power saving signal in the first transmission manner.

In some embodiments, the transceiver 2302 is configured to inform the terminal of spatial information of the power saving signal. The transceiver 2302 is configured to send the power saving signal in the first transmission manner based on the spatial information of the power saving signal.

In some embodiments, the transceiver 2302 is configured to send the power saving signal in the first transmission manner via a wireless power supply node.

In addition, the memory 2303 may be implemented by any type of volatile storage device or non-volatile storage device or a combination thereof.

Embodiments of the disclosure further provide a computer-readable storage medium. The storage medium is configured to store a computer program, and the computer program is executed by a processor to implement the transmission method for the power saving signal illustrated above.

Optionally, the computer-readable storage medium may include a ROM, a RAM, a solid state drive (SSD), and a CD-ROM. The RAM may include a resistive RAM (ReRAM) and a dynamic RAM (DRAM).

Embodiments of the disclosure further provide a chip. The chip includes programmable logic circuits and/or program instructions. The chip, when running, is configured to perform the foregoing transmission method for the power saving signal.

Embodiments of the present disclosure also provide a computer program product or computer program. The computer program product or computer program includes computer instructions which are stored in a computer-readable storage medium. A processor reads and executes the computer instructions from the computer-readable storage medium to implement the transmission method for the power saving signal.

## Claims

1. A transmission method for a power saving signal, comprising:
determining, by a terminal, a transmission manner for a power saving signal, the transmission manner comprising a first transmission manner or a second transmission manner, wherein
the first transmission manner is different from the second transmission manner in a parameter of at least one of a waveform, a modulation mode, a coding mode, or a multiple access mode.

2. The method of claim 1, further comprising:
receiving, by the terminal, configuration information, wherein
determining, by the terminal, the transmission manner for the power saving signal comprises:
determining, by the terminal, the transmission manner for the power saving signal according to the configuration information.

3. The method of claim 2, wherein the configuration information is carried in at least one of:
a system message;
a radio resource control (RRC) signaling;
a medium access control (MAC) layer signaling; or
a physical layer signaling.

4. The method of claim 2, further comprising:
sending, by the terminal, uplink information, wherein the uplink information is used to assist a network device in determining the transmission manner for the power saving signal.

5. The method of claim 4, wherein sending, by the terminal, the uplink information comprises:
sending, by the terminal, the uplink information via an uplink channel; or
sending, by the terminal, the uplink information via a backscatter signal.

6. The method of claim 4 or 5, wherein the uplink information comprises:
a measurement result for a reference signal; or
feedback information for a triggering signal, wherein the triggering signal is sent by the network device in the first transmission manner.

7. The method of claim 5, wherein the uplink channel comprises at least one of:
a physical uplink control channel (PUCCH);
a physical uplink shared channel (PUSCH); or
a physical random access channel (PRACH).

8. The method of claim 1, wherein determining, by the terminal, the transmission manner for the power saving signal comprises:
determining, by the terminal itself, the transmission manner for the power saving signal.

9. The method of claim 8, wherein determining, by the terminal itself, the transmission manner for the power saving signal comprises:
determining, by the terminal, the transmission manner for the power saving signal based on a measurement result for a reference signal or a measurement result for a wireless power supply signal.

10. The method of claim 9, further comprising:
obtaining, by the terminal, a threshold value configured by a network device, wherein
determining, by the terminal, the transmission manner for the power saving signal based on the measurement result for the reference signal or the measurement result for the wireless power supply signal comprises:
determining, by the terminal, the transmission manner for the power saving signal based on a magnitude comparison between the measurement result for the reference signal and the threshold value or a magnitude comparison between the measurement result for the wireless power supply signal and the threshold value.

11. The method of claim 7, further comprising:
reporting, by the terminal, the transmission manner for the power saving signal.

12. The method of claim 11, wherein the transmission manner for the power saving signal is carried in at least one of:
the PRACH;
an RRC signaling;
a physical layer signaling; or
the backscatter signal.

13. The method of any one of claims 1 to 12, further comprising:
receiving, by the terminal, the power saving signal sent in the first transmission manner.

14. The method of claim 13, further comprising:
determining, by the terminal, spatial information of the power saving signal, wherein
receiving, by the terminal, the power saving signal sent in the first transmission manner comprises:
receiving, by the terminal based on the spatial information of the power saving signal, the power saving signal sent in the first transmission manner.

15. The method of claim 13, wherein receiving, by the terminal, the power saving signal sent in the first transmission manner comprises:
receiving, by the terminal, the power saving signal sent by a wireless power supply node in the first transmission manner.

16. A transmission method of a power saving signal, comprising:
determining, by a network device, a transmission manner for a power saving signal, the transmission manner comprising a first transmission manner or a second transmission manner, wherein
the first transmission manner is different from the second transmission manner in a parameter of at least one of a waveform, a modulation mode, a coding mode, or a multiple access mode.

17. The method of claim 16, further comprising:
sending, by the network device, configuration information to a terminal, wherein the configuration information is used to configure the transmission manner for the power saving signal.

18. The method of claim 17, wherein the configuration information is carried in at least one of:
a system message;
a radio resource control (RRC) signaling;
a medium access control (MAC) layer signaling; or
a physical layer signaling.

19. The method of claim 18, further comprising:
receiving, by the network device, uplink information sent by the terminal, wherein
determining, by the network device, the transmission manner for the power saving signal comprises:
determining, by the network device based on the uplink information, the transmission manner for the power saving signal.

20. The method of claim 19, wherein receiving, by the network device, the uplink information sent by the terminal comprises:
receiving, by the network device via an uplink channel, the uplink information sent by the terminal; or
receiving, by the network device via a backscatter signal, the uplink information sent by the terminal.

21. The method of claim 19 or 20, wherein the uplink information comprises:
a measurement result for a reference signal; or
feedback information for a triggering signal, wherein the triggering signal is sent by the network device in the first transmission manner.

22. The method of claim 20, wherein the uplink channel comprises at least one of:
a physical uplink control channel (PUCCH);
a physical uplink shared channel (PUSCH); or
a physical random access channel (PRACH).

23. The method of claim 16, wherein determining, by the network device, the transmission manner for the power saving signal comprises:
determining, by the network device based on information reported by a terminal, the transmission manner for the power saving signal.

24. The method of claim 23, further comprising:
configuring, by the network device, a threshold value to the terminal, wherein the threshold value is a threshold used by the terminal when the terminal determines the transmission manner for the power saving signal based on a measurement result for a reference signal or a measurement result for a wireless power supply signal.

25. The method of claim 23, wherein the transmission manner for the power saving signal is carried in at least one of:
a PRACH;
an RRC signaling;
a physical layer signaling; or
a backscatter signal.

26. The method of any one of claims 13 to 25, further comprising:
sending, by the network device, the power saving signal in the first transmission manner.

27. The method of claim 26, further comprising:
informing, by the network device, the terminal of spatial information of the power saving signal, wherein
sending, by the network device, the power saving signal in the first transmission manner comprises:
sending, by the network device based on the spatial information of the power saving signal, the power saving signal in the first transmission manner.

28. The method of claim 26, wherein
the network device connects to a wireless power supply node; and
sending, by the network device, the power saving signal in the first transmission manner comprises:
sending, by the network device via the wireless power supply node, the power saving signal in the first transmission manner.

29. A transmission apparatus for a power saving signal, comprising:
a first determining module configured to determine a transmission manner for a power saving signal, the transmission manner comprising a first transmission manner or a second transmission manner, wherein
the first transmission manner is different from the second transmission manner in a parameter of at least one of a waveform, a modulation mode, a coding mode, or a multiple access mode.

30. The apparatus of claim 29, further comprising:
a first receiving module configured to receive configuration information, wherein
the first determining module is configured to determine the transmission manner for the power saving signal according to the configuration information.

31. The apparatus of claim 30, wherein the configuration information is carried in at least one of:
a system message;
a radio resource control (RRC) signaling;
a medium access control (MAC) layer signaling; or
a physical layer signaling.

32. The apparatus of claim 30, further comprising:
a first sending module configured to send uplink information, wherein the uplink information is used to assist a network device in determining the transmission manner for the power saving signal.

33. The apparatus of claim 32, wherein
the first sending module is configured to send the uplink information via an uplink channel; or
the first sending module is configured to send the uplink information via a backscatter signal.

34. The apparatus of claim 32 or 33, wherein the uplink information comprises:
a measurement result for a reference signal; or
feedback information for a triggering signal, wherein the triggering signal is sent by the network device in the first transmission manner.

35. The apparatus of claim 33, wherein the uplink channel comprises at least one of:
a physical uplink control channel (PUCCH);
a physical uplink shared channel (PUSCH); or
a physical random access channel (PRACH).

36. The apparatus of claim 29, wherein
a first sending module is configured to determine the transmission manner for the power saving signal on its own.

37. The apparatus of claim 36, wherein
the first sending module is configured to determine the transmission manner for the power saving signal based on a measurement result for a reference signal or a measurement result for a wireless power supply signal.

38. The apparatus of claim 37, further comprising:
a first receiving module configured to obtain a threshold value configured by a network device, wherein
the first determining module is configured to determine the transmission manner for the power saving signal based on a magnitude comparison between the measurement result for the reference signal and the threshold value or a magnitude comparison between the measurement result for the wireless power supply signal and the threshold value.

39. The apparatus of claim 36, further comprising:
the first sending module configured to report the transmission manner for the power saving signal.

40. The apparatus of claim 39, wherein the transmission manner for the power saving signal is carried in at least one of:
a PRACH;
an RRC signaling;
a physical layer signaling; or
a backscatter signal.

41. The apparatus of any one of claims 29 to 40, further comprising:
a first receiving module configured to receive the power saving signal sent in the first transmission manner.

42. The apparatus of claim 40, wherein
the first determining module is further configured to determine spatial information of the power saving signal; and
a first receiving module is configured to receive the power saving signal sent in the first transmission manner based on the spatial information of the power saving signal.

43. The apparatus of claim 40, wherein
a first receiving module is configured to receive the power saving signal sent by a wireless power supply node in the first transmission manner.

44. A transmission apparatus for of a power saving signal, comprising:
a second determining module configured to determine a transmission manner for a power saving signal, the transmission manner comprising a first transmission manner or a second transmission manner, wherein
the first transmission manner is different from the second transmission manner in a parameter of at least one of a waveform, a modulation mode, a coding mode, or a multiple access mode.

45. The apparatus of claim 44, further comprising:
a second sending module configured to send configuration information to a terminal, wherein the configuration information is used to configure the transmission manner for the power saving signal.

46. The apparatus of claim 45, wherein the configuration information is carried in at least one of:
a system message;
a radio resource control (RRC) signaling;
a medium access control (MAC) layer signaling; or
a physical layer signaling.

47. The apparatus of claim 45, further comprising:
a second receiving module configured to receive uplink information sent by the terminal, wherein
the second determining module is configured to determine the transmission manner for the power saving signal based on the uplink information.

48. The apparatus of claim 47, wherein
the second receiving module is configured to receive, via an uplink channel, the uplink information sent by the terminal; or
the second receiving module is configured to receive, via a backscatter signal, the uplink information sent by the terminal.

49. The apparatus of claim 47, wherein the uplink information comprises:
a measurement result for a reference signal; or
feedback information for a triggering signal, wherein the triggering signal is sent by a network device in the first transmission manner.

50. The apparatus of claim 48 or 49, wherein the uplink channel comprises at least one of:
a physical uplink control channel (PUCCH);
a physical uplink shared channel (PUSCH); or
a physical random access channel (PRACH).

51. The apparatus of claim 44, wherein
the second determining module is configured to determine the transmission manner for the power saving signal based on information reported by a terminal.

52. The apparatus of claim 51, further comprising:
the second sending module configured to configure a threshold value to the terminal, wherein the threshold value is a threshold used by the terminal when the terminal determines the transmission manner for the power saving signal based on a measurement result for a reference signal or a measurement result for a wireless power supply signal.

53. The apparatus of claim 51, wherein the transmission manner for the power saving signal is carried in at least one of:
a PRACH;
an RRC signaling;
a physical layer signaling; or
a backscatter signal.

54. The apparatus of any one of claims 44 to 53, wherein
a second sending module is configured to send the power saving signal in the first transmission manner.

55. The apparatus of claim 54, further comprising:
the second sending module is configured to inform a terminal of spatial information of the power saving signal, wherein
the second sending module is configured to send the power saving signal in the first transmission manner based on the spatial information of the power saving signal.

56. The apparatus of claim 54, wherein
the second sending module is configured to send the power saving signal in the first transmission manner via a wireless power supply node.

57. A terminal, comprising a processor, wherein
the processor is configured to determine a transmission manner for a power saving signal, the transmission manner comprising a first transmission manner or a second transmission manner, wherein
the first transmission manner is different from the second transmission manner in a parameter of at least one of a waveform, a modulation mode, a coding mode, or a multiple access mode.

58. A network device, comprising a processor, wherein
the processor is configured to determine a transmission manner for a power saving signal, the transmission manner comprising a first transmission manner or a second transmission manner, wherein
the first transmission manner is different from the second transmission manner in a parameter of at least one of a waveform, a modulation mode, a coding mode, or a multiple access mode.

59. A computer-readable storage medium, configured to store computer programs that are executed by a processor to perform the transmission method for a power saving signal of any of claims 1 to 28.

60. A chip, comprising programmable logic circuits and/or program instructions, and when executed, configured to perform the transmission method for a power saving signal of any of claims 1 to 28.

61. A computer program product or computer program, comprising computer instructions that are stored in a computer-readable storage medium, wherein a processor reads the computer instructions from the computer-readable storage medium and executes the computer instructions to perform the transmission method for a power saving signal of any of claims 1 to 28.
